# FASCICULE DE BREVET EUROPEEN

(11) **EP 3 916 249 B1**
(45) Date de publication et mention de la délivrance du brevet: **12.04.2023**
(21) Numéro de dépôt: 21172317.6
(22) Date de dépôt: 05.05.2021
(51) Int. Cl.: F16B 39/02, F16B 39/12

(54) **BOULON ÉQUIPÉ D'UN SYSTÈME DE BLOCAGE EN ROTATION AXIAL ET ASSEMBLAGE COMPORTANT AU MOINS UN TEL BOULON**
BOLZEN, DER MIT EINER AXIALEN DREHSICHERUNG AUSGESTATTET IST, UND BAUGRUPPE MIT MINDESTENS EINEM SOLCHEN BOLZEN
BOLT PROVIDED WITH A SYSTEM FOR BLOCKING AXIAL ROTATION AND ASSEMBLY COMPRISING AT LEAST ONE SUCH BOLT

(30) Priorité: 29.05.2020 FR 2005722
(43) Date de publication de la demande: 01.12.2021
(73) Titulaire: Airbus (S.A.S.), 31700 Blagnac (FR)
(72) Inventeur: AJALA, Oluwole, 31700 BLAGNAC (FR)
(74) Mandataire: Sarraméa, Claude

(56) Documents cités:
- FR-A- 405 012
- GB-A- 2 066 402

## Description

La présente demande se rapporte à un boulon équipé d'un système de blocage en rotation axial ainsi qu'à un assemblage comportant au moins un tel boulon.

Le document GB 2 066 402 A divulgue un système de blocage connu.

Selon un mode de réalisation, un boulon comprend une vis présentant une tige filetée, un écrou se vissant sur la tige filetée ainsi qu'un système de blocage en rotation pour éviter un dévissage intempestif. Selon une configuration, l'écrou est un écrou à créneaux et le système de blocage en rotation comprend une épingle transversale ainsi qu'un orifice traversant la tige filetée, perpendiculaire à l'axe de la tige filetée, présentant une section identique à celle de l'épingle. L'écrou à créneaux comprend des encoches longitudinales (parallèles à l'axe de l'écrou) délimitant des créneaux.

En fonctionnement, l'épingle se loge dans deux encoches longitudinales diamétralement opposées à l'écrou et dans l'orifice traversant de la tige filetée pour immobiliser en rotation l'écrou par rapport à la vis. Pour que l'épingle puisse être insérée, un dégagement est nécessaire selon une direction transversale (perpendiculaire à l'axe de la tige filetée) dans le prolongement de l'orifice traversant de la tige filetée. Or, dans certains cas, un tel dégagement selon la direction transversale n'existe pas ou n'est pas envisageable.

La présente invention vise à remédier à tout ou partie des inconvénients de l'art antérieur.

A cet effet, l'invention a pour objet un boulon comportant une tige filetée présentant une face terminale, un écrou se vissant sur la tige filetée à partir de la face terminale ainsi qu'un système de blocage empêchant l'écrou de se dévisser par rapport à la tige filetée et comportant une première partie coopérant avec l'écrou de manière à l'immobiliser en translation et/ou en rotation. Selon l'invention, le système de blocage comprend :
- un logement, positionné dans la tige filetée, débouchant au niveau de la face terminale de la tige filetée,
- un trou de passage traversant la première partie,
- une deuxième partie comportant un premier tronçon se logeant dans le logement de la tige filetée ainsi qu'un deuxième tronçon se logeant dans le trou de passage de la première partie et présentant une section transversale configurée pour immobiliser en rotation la première partie par rapport à la tige filetée,

- une vis de blocage présentant une tête en appui contre la première partie ainsi qu'une tige filetée passant à travers le trou de passage et se vissant dans la deuxième partie pour immobiliser les première et deuxième parties en translation l'une par rapport à l'autre,
- le premier tronçon de la deuxième partie étant expansible et configuré pour occuper un état rétracté dans lequel le premier tronçon peut coulisser dans le logement et un état expansé dans lequel la deuxième partie est immobilisée dans le logement de la tige filetée.

Le système de blocage ne nécessite pas de dégagement selon une direction transversale pour être mis en oeuvre, les première et deuxième parties ainsi que la vis de blocage étant mises en place selon la direction axiale.

Selon une autre caractéristique, le premier tronçon de la deuxième partie et le logement de la tige filetée présentent des sections transversales identiques comprenant au moins un méplat. En complément, le deuxième tronçon de la deuxième partie et le trou de passage de la première partie présentent des sections transversales identiques comprenant au moins un méplat.

Selon une autre caractéristique, les premier et deuxième tronçons ont la même section transversale.

Selon une autre caractéristique, les premier et deuxième tronçons ont la même section transversale hexagonale.

Selon une autre caractéristique, la deuxième partie comprend un orifice taraudé dans lequel se visse la vis de blocage, s'étendant entre des première et deuxième extrémités de la deuxième partie ainsi qu'au moins une fente configurée pour permettre une expansion du premier tronçon lors d'un vissage de la vis de blocage dans l'orifice taraudé au niveau du premier tronçon.

Selon une autre caractéristique, la deuxième partie comprend une fente pour chacune des faces de la section transversale hexagonale.

Selon une autre caractéristique, la première partie comprend des première et deuxième faces transversales, une face latérale extérieure reliant les première et deuxième faces transversales ainsi qu'un logement débouchant au niveau de la première face transversale orientée vers l'écrou et présentant un fond et une face latérale intérieure, le trou de passage reliant le fond et la deuxième face transversale.

Selon un premier mode de réalisation, la face latérale intérieure du logement est taraudée et configurée pour se visser sur la tige filetée.

Selon un deuxième mode de réalisation, la face latérale intérieure du logement est configurée pour loger l'écrou et présente une section transversale identique à celle d'une face périphérique de l'écrou afin de l'immobiliser en rotation.

L'invention a également pour objet un assemblage comprenant au moins un boulon selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une coupe longitudinale d'un assemblage comportant un boulon illustrant un premier mode de réalisation,
- La figure 2 est une vue depuis une extrémité d'une tige filetée du boulon visible sur la figure 1,

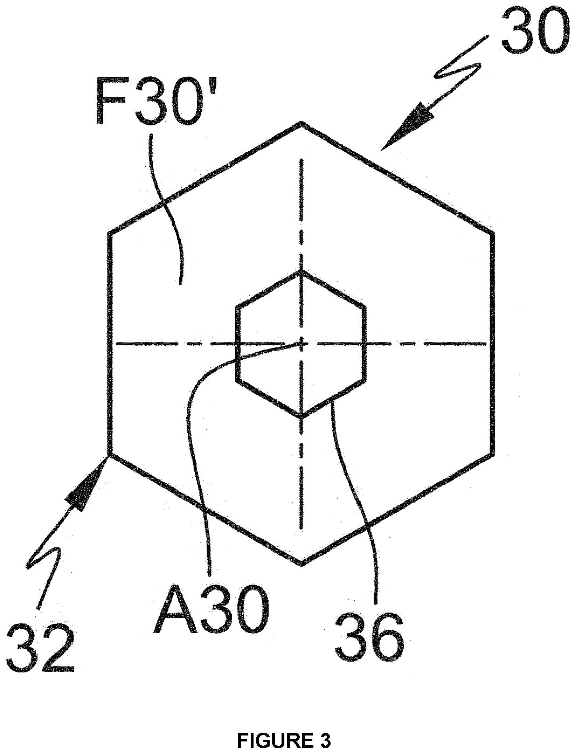

- La figure 3 est une vue de dessus d'une première partie d'un système de blocage du boulon visible sur la figure 1,
- La figure 4 est une vue de dessous de la première partie du système de blocage visible sur la figure 3,

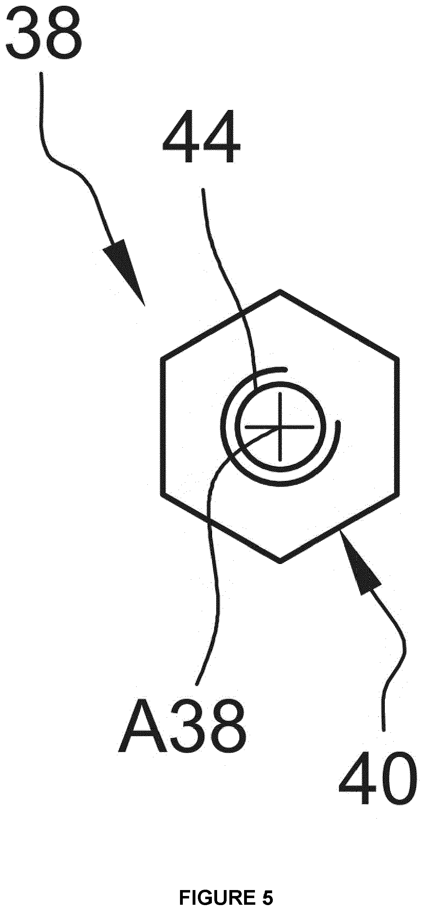

- La figure 5 est une vue de dessus d'une deuxième partie du système de blocage du boulon visible sur la figure 1,
- La figure 6 est une vue en perspective de la deuxième partie du système de blocage visible sur la figure 5,
- La figure 7 est une coupe longitudinale de la deuxième partie du système de blocage visible sur la figure 5,
- La figure 8 est une coupe longitudinale d'un assemblage comportant un boulon illustrant un deuxième mode de réalisation,

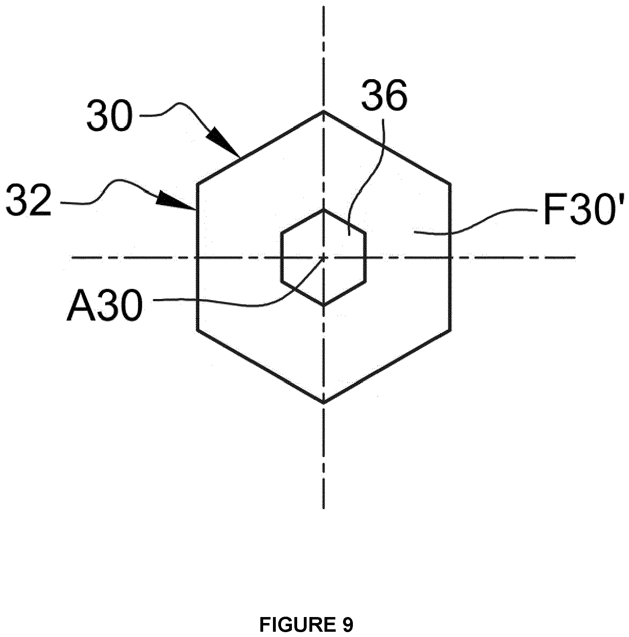

- La figure 9 est une vue de dessus d'une première partie d'un système de blocage du boulon visible sur la figure 8,
- La figure 10 est une vue de dessous de la première partie du système de blocage visible sur la figure 9,
- La figure 11 est une vue de dessus d'une deuxième partie d'un système de blocage illustrant un autre mode de réalisation, et
- La figure 12 est une vue de dessous d'une première partie d'un système de blocage illustrant un autre mode de réalisation.

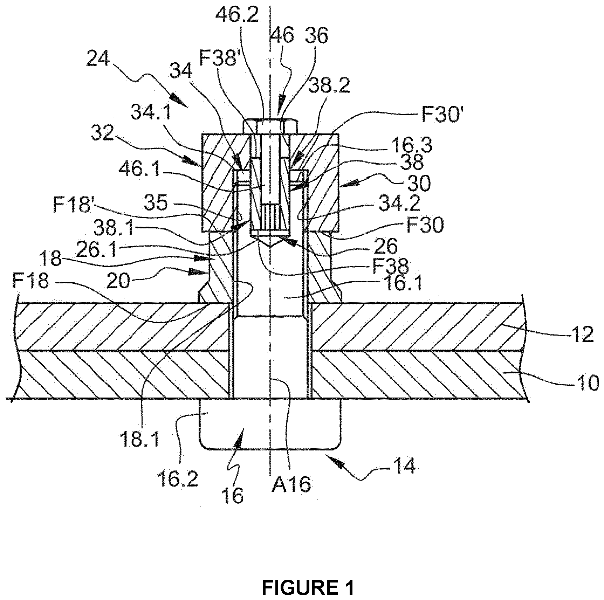

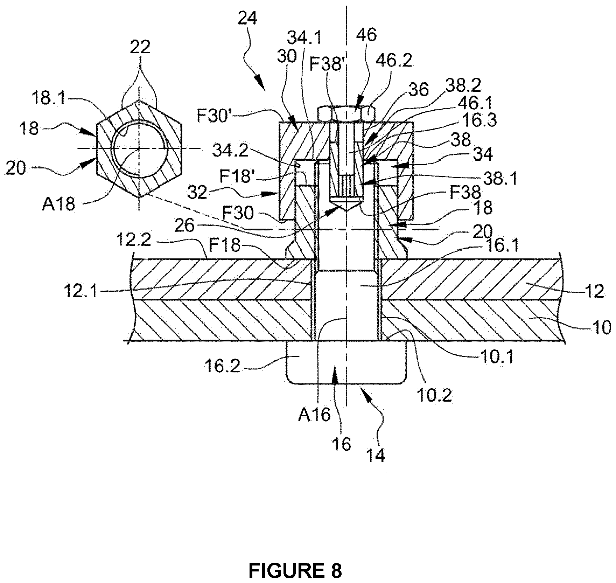

Selon des modes de réalisation illustrés sur les figures 1 et 8, un assemblage comprend au moins deux pièces 10, 12 ainsi qu'au moins un boulon 14 maintenant les deux pièces 10 et 12 l'une contre l'autre.

Selon une première configuration, le boulon 14 comprend une vis 16 présentant une tige filetée 16.1 et une tête 16.2 reliée à une première extrémité de la tige filetée 16.1 ainsi qu'un écrou 18 présentant un trou taraudé 18.1 se vissant sur la tige filetée 16.1. En complément, chacune des deux pièces 10, 12 comprend un trou de passage 10.1, 12.1 pour la tige filetée 16.1 ainsi qu'une face de contact 10.2, 12.2 contre laquelle prend appui la tête 16.2 de la vis 16 ou l'écrou 18.

Selon une autre configuration, le boulon 14 comprend uniquement une tige filetée 16.1, appelée goujon, se vissant dans la première pièce 10 et traversant la deuxième pièce 12.

Quelle que soit la configuration, le boulon 16 comprend une tige filetée 16.1 présentant un axe A16 et une face terminale 16.3, approximativement perpendiculaire à l'axe A16, à partir de laquelle est vissé l'écrou 18. La tige filetée 16.1 présente au moins un filet qui s'étend, à partir de la face terminale 16.3, sur au moins une partie de la hauteur de la tige filetée 16.1 (dimension prise parallèlement à l'axe A16).

Pour la suite de la description, une direction axiale est parallèle à l'axe A16 de la tige filetée 16.1. Un plan transversal est perpendiculaire à l'axe A16 de la tige filetée 16.1.

Le trou taraudé 18.1 de l'écrou 18 présente un axe A18 confondu avec l'axe A16 de la tige filetée 16.1 lorsque l'écrou 18 est vissé sur la tige filetée 16.1. L'écrou 18 s'étend entre des première et deuxième faces transversales F18, F18', la première face transversale F18 étant plaquée contre l'une des pièces de l'assemblage en fonctionnement, notamment la face de contact 12.2 de la deuxième pièce 12t.

L'écrou 18 comprend une face périphérique 20 comportant au moins un méplat 22 pour pouvoir visser l'écrou 18. Selon une configuration, le méplat 22 s'étend à partir de la deuxième face transversale F18' sur au moins une partie de la hauteur de l'écrou 18 (dimension prise parallèlement à l'axe A18). La face périphérique 20 peut présenter plusieurs méplats 22. Selon un mode de réalisation visible sur la figure 8, la face transversale 20 présente une section transversale hexagonale qui s'étend à partir de la deuxième face transversale F18'.

Le boulon 14 comprend un système de blocage 24, visible sur les figures 1 et 8, empêchant l'écrou 18 de se dévisser par rapport à la tige filetée 16.1.

Le système de blocage 24 comprend un logement 26, positionné dans la tige filetée 16.1, débouchant au niveau de la face terminale 16.3 de la tige filetée 16.1. Ce logement 26 est coaxial à l'axe A16 de la tige filetée 16.1. Il présente un fond 26.1 ainsi qu'une paroi périphérique 26.2. Le logement 26 présente une section transversale sensiblement constante sur toute sa hauteur (dimension prise parallèlement à l'axe A16 de la tige filetée 16.1).

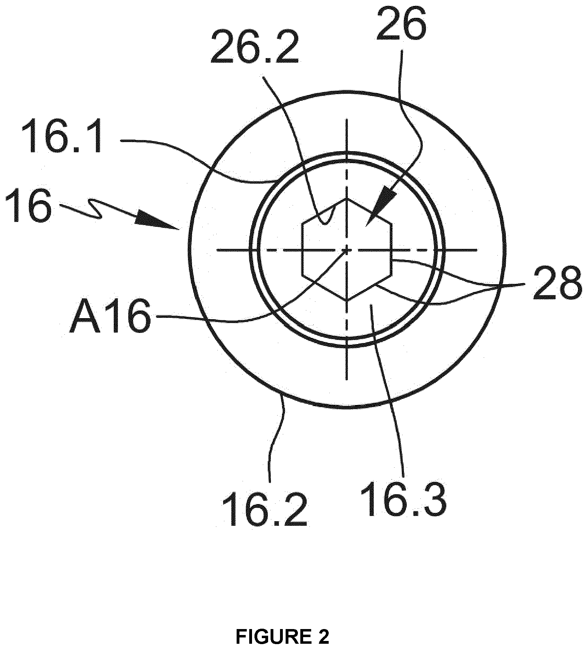

Selon une configuration, la paroi périphérique 26.2 du logement 26 comprend au moins un méplat 28 qui s'étend à partir de la face terminale 16.3 de la tige filetée 16 sur au moins une partie de la hauteur du logement 26. La paroi périphérique 26.2 du logement 26 peut présenter plusieurs méplats 28, comme illustré sur la figure 2. Selon une configuration, le logement 26 présente une section transversale hexagonale.

Le système de blocage 24 comprend une première partie 30 configurée pour bloquer l'écrou 18.

Selon un premier mode de réalisation visible sur la figure 1, la première partie 30 coopère en fonctionnement avec la deuxième face transversale F18' de l'écrou 18 et l'immobilise en translation selon la direction axiale.

Selon un deuxième mode de réalisation visible sur la figure 8, la première partie 30 coopère en fonctionnement avec la face périphérique 20 de l'écrou 18 et l'immobilise en rotation.

La première partie 30 présente un axe A30 orienté selon la direction axiale, confondu avec l'axe A16 de la tige filetée 16.1 en fonctionnement. La première partie 30 comprend des première et deuxième faces transversales F30, F30', sensiblement parallèles entre elles et perpendiculaires à l'axe A30, une face latérale extérieure 32 reliant les première et deuxième faces transversales F30, F30', entourant l'axe A30, ainsi qu'un logement 34 débouchant au niveau de la première face transversale F30 et espacé de la deuxième face transversale F30'.

Ce logement 34 présente un fond 34.1 approximativement parallèle aux première et deuxième faces transversales F30, F30' ainsi qu'une face latérale intérieure 34.2 entourant l'axe A30, coaxiale à l'axe A30.

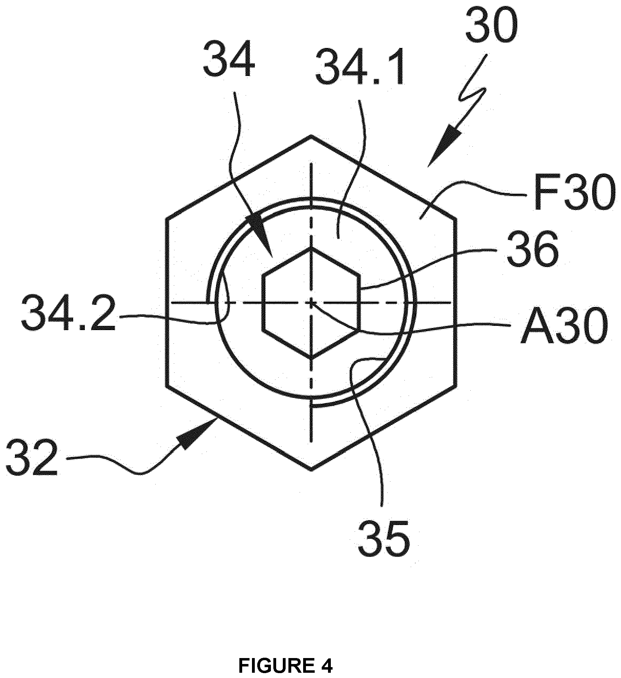

Selon le premier mode de réalisation, la face latérale intérieure 34.2 est taraudée et configurée pour se visser sur la tige filetée 16. 1. Selon ce premier mode de réalisation, la face latérale intérieure 34.2 est cylindrique et coaxiale à l'axe A30. Comme illustré sur les figures 2 et 4, elle présente un diamètre sensiblement égal à celui de la tige filetée 16.1 ainsi qu'un filetage 35 qui s'étend à partir de la première face transversale F30, sur au moins une partie de la hauteur du logement 34 (dimension prise parallèlement à l'axe A30), configuré pour permettre un vissage de la première partie 30 sur la tige filetée 16.1.

En complément, la face latérale extérieure 32 est configurée pour permettre un vissage de la première partie 30 sur la tige filetée 16.1. Selon une configuration, la face latérale extérieure 32 présente une section transversale hexagonale. Bien entendu, l'invention n'est pas limitée à cette section transversale.

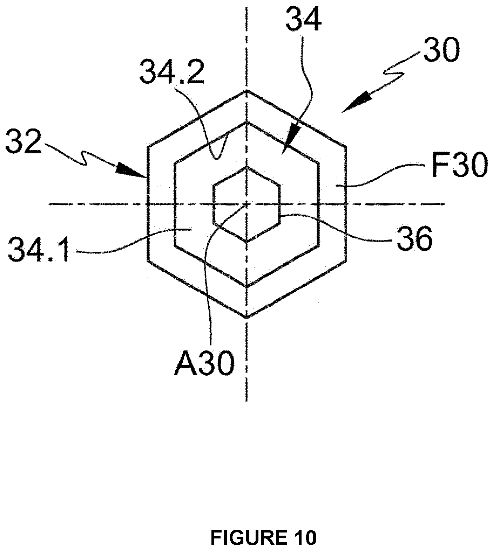

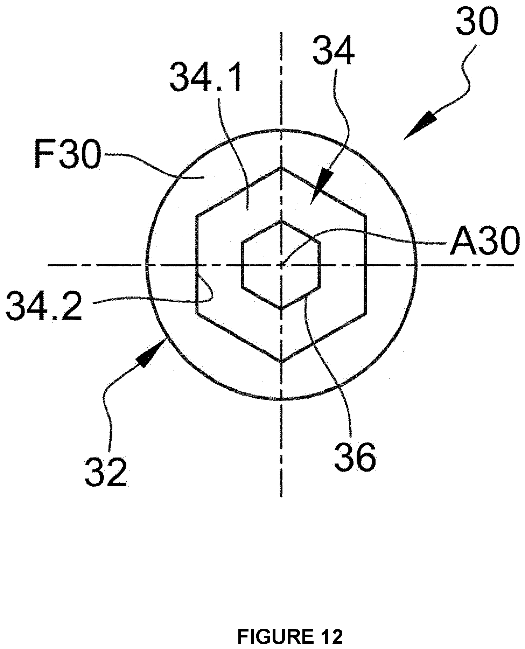

Selon le deuxième mode de réalisation, la face latérale intérieure 34.2 du logement 34 est configurée pour loger l'écrou 18. Selon ce deuxième mode de réalisation, la face latérale intérieure 34.2 comprend une section transversale approximativement identique à celle de la face périphérique 20 de l'écrou 18. Selon des modes de réalisation visibles sur les figures 10 et 12, la face latérale intérieure 34.2 a une section transversale hexagonale identique à celle de la face périphérique 20 de l'écrou 18. En complément, la face latérale extérieure 32 peut être cylindrique, comme illustré sur la figure 12, ou hexagonale, comme illustré sur la figure 10. Bien entendu, l'invention n'est pas limitée à ces formes pour la face latérale extérieure 32 de l'écrou 18.

La première partie 30 comprend un trou de passage 36, reliant la deuxième face transversale F30' et le fond 34.1 du logement 34, coaxial au logement 34.

Quel que soit le mode de réalisation, la première partie 30 prend la forme d'un capuchon. Il coiffe au moins la face terminale 16.3 de la tige filetée 16.1, coopère avec l'écrou 18 de manière à l'immobiliser en translation et/ou en rotation et comprend un trou de passage 36. Le système de blocage 24 comprend également une deuxième partie 38 configurée pour immobiliser en rotation la première partie 30 et la tige filetée 16.1 l'une par rapport à l'autre. La deuxième partie 38 présente un axe A38 orienté selon la direction axiale, confondu avec l'axe A16 de la tige filetée 16.1 en fonctionnement. La deuxième partie 38 comprend des première et deuxième extrémités F38, F38', sensiblement parallèles entre elles et perpendiculaires à l'axe A38, une paroi latérale extérieure 40 reliant les première et deuxième extrémités F38, F38', entourant l'axe A38 et coaxiale à l'axe A38. En fonctionnement, la première extrémité F38 est logée dans le logement 26 de la tige filetée 16.1 et la deuxième extrémité F38' est logée dans le trou de passage 36 de la première partie 30.

La paroi latérale extérieure 40 comprend un premier tronçon 38.1 se logeant en fonctionnement dans le logement 26 et coopérant avec la tige filetée 16.1 ainsi qu'un deuxième tronçon 38.2 se logeant en fonctionnement dans le trou de passage 36 et coopérant avec la première partie 30.

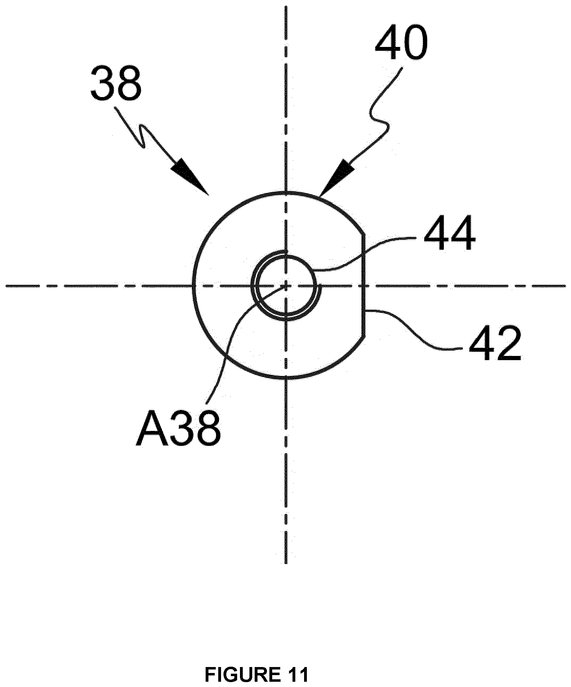

Le premier tronçon 38.1 s'étend à partir de la première extrémité F38. Il présente une section transversale complémentaire à celle du logement 26 de la tige filetée 16.1 pour que le premier tronçon 38.1 et la tige filetée 16.1 soient immobilisés en rotation l'un par rapport à l'autre. Selon une configuration, lorsque le logement 26 présente une section transversale hexagonale, le premier tronçon 38.1 a une section transversale hexagonale identique. Bien entendu, l'invention n'est pas limitée à cette section transversale. Ainsi, le premier tronçon 38.1 et le logement 26 pourraient être cylindriques et comprendre au moins un méplat 42, comme illustré sur la figure 11.

Le deuxième tronçon 38.2 s'étend à partir de la deuxième extrémité F38'. Il présente une section transversale complémentaire à celle du trou de passage 36 de la première partie 30. Selon une configuration, les sections transversales du deuxième tronçon 38.2 et du trou de passage 36 sont hexagonales. Bien entendu, l'invention n'est pas limitée à ces sections transversales. Ainsi, le deuxième tronçon 38.2 et le trou de passage 36 pourraient être cylindriques et comprendre au moins un méplat 42, comme illustré sur la figure 11.

Selon une configuration, les premier et deuxième tronçons 38.1 et 38.2 ont la même section transversale. Ainsi, la deuxième partie 38 comprend une section transversale sensiblement constante entre les première et deuxième extrémités F38, F38'.

Bien entendu, l'invention n'est pas limitée aux modes de réalisation précédemment décrits. Quel que soit le mode de réalisation, la deuxième partie 38 est configurée pour immobiliser en rotation, autour de la direction axiale, la première partie 30 par rapport à la tige filetée 16.1 en se logeant partiellement dans la tige filetée 16.1 et la première partie 30.

La deuxième partie 38 comprend un orifice 44 débouchant au moins au niveau de la deuxième extrémité F38', taraudé sur au moins une partie de sa hauteur (dimension prise parallèlement à l'axe A38) à partir de la deuxième extrémité F38'. Cet orifice 44 est coaxial à l'axe A38 et orienté axialement. Selon une configuration, l'orifice 44 est traversant et relie les première et deuxième extrémités F38, F38'.

Le système de blocage 24 comprend également une vis de blocage 46 présentant une tige filetée 46.1 se vissant en fonctionnement dans l'orifice 44 de la deuxième partie 38, en traversant le trou de passage 36 de la première partie 30 ainsi qu'une tête 46.2, prévue à une extrémité de la tige filetée 46.1, présentant une section supérieure à celle du trou de passage 36 et prenant appui contre la deuxième face transversale F30' de la première partie 30 en fonctionnement. Selon une configuration, la tête 46.2 de la vis de blocage 46 est hexagonale. Bien entendu, l'invention n'est pas limitée à ce mode de réalisation. Ainsi, quel que soit le mode de réalisation, la vis de blocage 46 est configurée pour immobiliser en translation selon la direction axiale les première et deuxième parties 30, 38 l'une par rapport à l'autre en se vissant dans la deuxième partie 38. Lorsque la vis de blocage 46 est vissée, la première partie 30 est intercalée entre la tête 46.2 de la vis de blocage 46 et la face terminale 16.3 de la tige filetée 16.1.

Pour immobiliser en translation, selon la direction axiale, la deuxième partie 38 par rapport à la tige filetée 16.1, le premier tronçon 38.1 est expansible et configuré pour occuper un état rétracté dans lequel le premier tronçon 38.1 présente une section identique ou inférieure à celle du logement 26 de la tige filetée 16.1 et peut y coulisser ainsi qu'un état expansé dans lequel le tronçon 38.1 présente une section supérieure à celle du logement 26 de la tige filetée 16.1, les frottements entre la deuxième partie 38 et la tige filetée 16.1 étant tels que la deuxième partie 38 est immobilisée dans le logement 26.

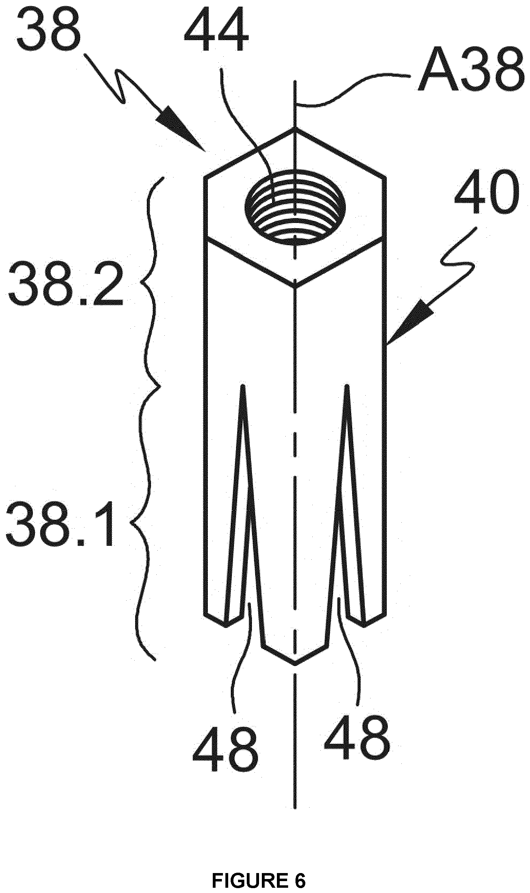

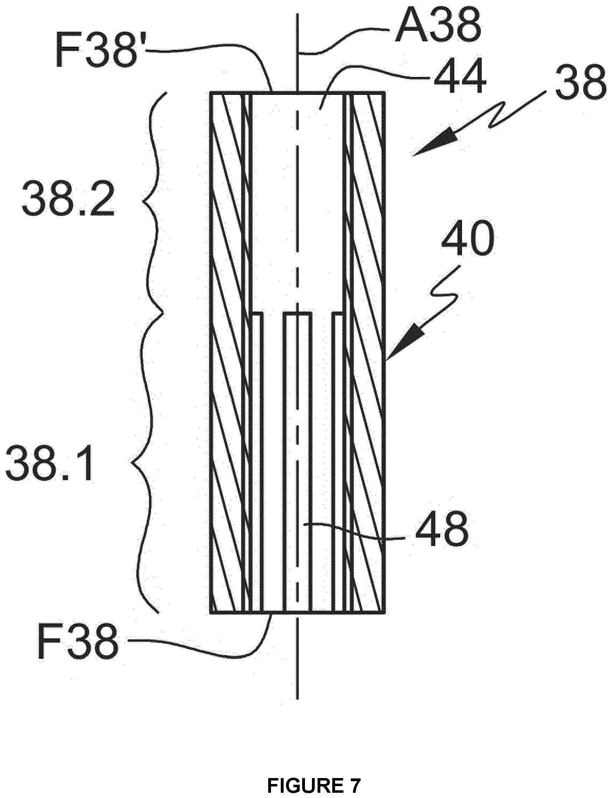

Selon une configuration, la deuxième partie 38 comprend au moins une fente 48, s'étendant sur le premier tronçon 38.1 à partir de la première extrémité F38, reliant la paroi latérale extérieure 40 et l'orifice 44, permettant au premier tronçon 38.1 de s'expanser. Selon un mode de réalisation visible sur les figures 6 et 7, la deuxième partie 38 comprend plusieurs fentes 48 réparties sur sa périphérie. Dans le cas d'une section transversale hexagonale, la deuxième partie 38 comprend six fentes, une sur chacune des faces de la section transversale hexagonale. Chacune de ces fentes 48 ne s'étend pas au-delà du premier tronçon 38.1. La deuxième partie 38 est configurée pour que le vissage de la vis de blocage 46 dans l'orifice 44 taraudé de la deuxième partie 38 au niveau du premier tronçon 38.1 provoque l'expansion du premier tronçon 38.1 et son passage à l'état expansé. La deuxième partie 38 est réalisée en un matériau élastique afin qu'un dévissage de la vis de blocage 46 en dehors du premier tronçon 38.1 provoque le retour dudit premier tronçon 38.1 à l'état rétracté.

Bien entendu, l'invention n'est pas limitée à ce mode de réalisation pour provoquer l'expansion du premier tronçon 38.1 de la deuxième partie 38 et son immobilisation dans le logement 26 de la tige filetée 16.1.

Le principe de fonctionnement est maintenant décrit.

Quel que soit le mode de réalisation, dans un premier temps, l'écrou 18 est vissé sur la tige filetée 16.1 jusqu'à un couple de serrage souhaité.

En suivant, la première partie 30 est mise en place.

Selon le premier mode de réalisation visible sur la figure 1, la première partie 30 est vissée sur la tige filetée 16.1 jusqu'à venir en contact avec l'écrou 18. A la manière d'un contreécrou, la première partie 30 immobilise l'écrou 18 en translation selon une direction axiale. Selon le deuxième mode de réalisation visible sur la figure 8, la première partie 30 est positionnée autour de l'écrou 18. La première partie 30 et l'écrou 18 ayant des formes coopérantes, la première partie 30 et l'écrou 18 sont immobiles en rotation l'un par rapport à l'autre.

La première partie 30 est positionnée de manière à ce que son trou de passage 36 et le logement 26 de la tige filetée 16.1 coopèrent afin de permettre l'insertion de la deuxième partie 38.

Dès lors, cette dernière est insérée et positionnée partiellement dans le trou de passage 36 de la première partie 30 et le logement 26 de la tige filetée 16.1. Ainsi, la première partie 30 et la tige filetée 16.1 sont immobilisées en rotation l'une par rapport à l'autre.

La vis de blocage 46 est introduite dans le trou de passage 36 puis vissée dans la deuxième partie 38 jusqu'à venir en contact avec la première partie 30. Dans le cas du premier mode de réalisation visible sur la figure 1, la première partie 30 est en contact avec l'écrou 18. Dans le cas du deuxième mode de réalisation visible sur la figure 8, la première partie 30, plus particulièrement le fond 34.1 de son logement 34, est en contact avec la face terminale 16.3 de la tige filetée 16.1. Le vissage complet de la vis de blocage 46 provoque l'expansion du premier tronçon 38.1 de la deuxième partie 38 qui est alors immobilisée en translation selon la direction axiale par rapport à la tige filetée 18.1. Ainsi, la première partie 30, immobilisant l'écrou 18 en rotation et/ou en translation selon la direction axiale, est immobilisée en translation et en rotation par rapport à la tige filetée 16.1.

Selon l'invention, le système de blocage 24 ne nécessite pas de dégagement selon une direction transversale pour être mis en oeuvre, les première et deuxième parties 30 et 38 ainsi que la vis de blocage 46 étant mises en place selon la direction axiale.

Il est possible d'augmenter la précision angulaire de l'immobilisation en rotation de la première partie 30 par rapport à la tige filetée 16.1 en augmentant le nombre de méplats au niveau de la (ou des) section(s) transversale(s) du trou de passage 36, de la deuxième partie 38 et/ou du logement 26 de la tige filetée 16.1.

Ainsi, avec une section hexagonale, la précision angulaire est de l'ordre de 60°. Si le trou de passage 36 présente une section transversale avec un double hexagone, la précision angulaire est de l'ordre de 30°.

## Revendications

1. Boulon comportant une tige filetée (16.1) présentant une face terminale (16.3), un écrou (18) se vissant sur la tige filetée (16.1) à partir de la face terminale (16.3) ainsi qu'un système de blocage (24) empêchant l'écrou (18) de se dévisser par rapport à la tige filetée (16.1) et comportant une première partie (30) coopérant avec l'écrou (18) de manière à l'immobiliser en translation et/ou en rotation, le système de blocage (24) comprenant un logement (26), positionné dans la tige filetée (16.1), débouchant au niveau de la face terminale (16.3) de la tige filetée (16.1), un trou de passage (36) traversant la première partie (30), une deuxième partie (38) comportant un premier tronçon (38.1) se logeant dans le logement (26) de la tige filetée (16.1) ainsi qu'un deuxième tronçon (38.2) se logeant dans le trou de passage (36) de la première partie (30) et présentant une section transversale configurée pour immobiliser en rotation la première partie (30) par rapport à la tige filetée (16.1), **caractérisé par** une vis de blocage (46) présentant une tête (46.2) en appui contre la première partie (30) ainsi qu'une tige filetée (46.1) passant à travers le trou de passage (36) et se vissant dans la deuxième partie (38) pour immobiliser les première et deuxième parties (30, 38) en translation l'une par rapport à l'autre, le premier tronçon (38.1) de la deuxième partie (38) étant expansible et configuré pour occuper un état rétracté dans lequel le premier tronçon (38.1) peut coulisser dans le logement (26) et un état expansé dans lequel la deuxième partie (38) est immobilisée dans le logement (26) de la tige filetée (16.1).

2. Boulon selon la revendication 1, **caractérisé en ce que** le premier tronçon (38.1) de la deuxième partie (38) et le logement (26) de la tige filetée (16.1) présentent des sections transversales identiques comprenant au moins un méplat (42) et **en ce que** le deuxième tronçon (38.2) de la deuxième partie (38) et le trou de passage (36) de la première partie (30) présentent des sections transversales identiques comprenant au moins un méplat (42).

3. Boulon selon la revendication précédente, **caractérisé en ce que** les premier et deuxième tronçons (38.1, 38.2) ont la même section transversale.

4. Boulon selon la revendication précédente, **caractérisé en ce que** les premier et deuxième tronçons (38.1, 38.2) ont la même section transversale hexagonale.

5. Boulon selon l'une des revendications précédentes, **caractérisé en ce que** la deuxième partie (38) comprend un orifice (44) taraudé dans lequel se visse la vis de blocage (46), s'étendant entre des première et deuxième extrémités (F38, F38') de la deuxième partie (38) ainsi qu'au moins une fente (48) configurée pour permettre une expansion du premier tronçon (38.1) lors d'un vissage de la vis de blocage (46) dans l'orifice (44) taraudé au niveau du premier tronçon (38.1).

6. Boulon selon les revendications 4 et 5, **caractérisé en ce que** la deuxième partie (38) comprend une fente (48) pour chacune des faces de la section transversale hexagonale.

7. Boulon selon l'une des revendications précédentes, **caractérisé en ce que** la première partie (30) comprend des première et deuxième faces transversales (F30, F30'), une face latérale extérieure (32) reliant les première et deuxième faces transversales (F30, F30) ainsi qu'un logement (34) débouchant au niveau de la première face transversale (F30) orientée vers l'écrou (18) et présentant un fond (34.1) ainsi qu'une face latérale intérieure (34.2), le trou de passage (36) reliant le fond (34.1) et la deuxième face transversale (F30').

8. Boulon selon la revendication précédente, **caractérisé en ce que** la face latérale intérieure (34.2) du logement (34) est taraudée et configurée pour se visser sur la tige filetée (16. 1).

9. Boulon selon la revendication 7, **caractérisé en ce que** la face latérale intérieure (34.2) du logement (34) est configurée pour loger l'écrou (18) et présente une section transversale identique à celle d'une face périphérique (20) de l'écrou (18) pour l'immobiliser en rotation.

10. Assemblage comprenant au moins un boulon selon l'une des revendications précédentes comportant une tige filetée (16.1) présentant une face terminale (16.3), un écrou (18) se vissant sur la tige filetée (16.1) à partir de la face terminale (16.3) ainsi qu'un système de blocage (24) empêchant l'écrou (18) de se dévisser par rapport à la tige filetée (16.1) et comportant une première partie (30) coopérant avec l'écrou (18) de manière à l'immobiliser en translation et/ou en rotation, **caractérisé en ce que** le système de blocage (24) comprend un logement (26), positionné dans la tige filetée (16.1), débouchant au niveau de la face terminale (16.3) de la tige filetée (16.1), un trou de passage (36) traversant la première partie (30), une deuxième partie (38) comportant un premier tronçon (38.1) se logeant dans le logement (26) de la tige filetée (16.1) ainsi qu'un deuxième tronçon (38.2) se logeant dans le trou de passage (36) de la première partie (30) et présentant une section transversale configurée pour immobiliser en rotation la première partie (30) par rapport à la tige filetée (16.1), une vis de blocage (46) présentant une tête (46.2) en appui contre la première partie (30) ainsi qu'une tige filetée (46.1) passant à travers le trou de passage (36) et se vissant dans la deuxième partie (38) pour immobiliser les première et deuxième parties (30, 38) en translation l'une par rapport à l'autre, le premier tronçon (38.1) de la deuxième partie (38) étant expansible et configuré pour occuper un état rétracté dans lequel le premier tronçon (38.1) peut coulisser dans le logement (26) et un état expansé dans lequel la deuxième partie (38) est immobilisée dans le logement (26) de la tige filetée (16.1).

## Patentansprüche

1. Bolzen, umfassend einen Gewindeschaft (16.1), der eine Endfläche (16.3) aufweist, eine Mutter (18), die von der Endfläche (16.3) aus auf den Gewindeschaft (16.1) aufgeschraubt wird, sowie ein Blockiersystem (24), das verhindert, dass sich die Mutter (18) bezüglich des Gewindeschaftes (16.1) löst, und einen ersten Teil (30) umfasst, der mit der Mutter (18) so zusammenwirkt, dass er sie gegen Translation und/oder gegen Verdrehung sichert, wobei das Blockiersystem (24) eine im Gewindeschaft (16.1) positionierte Aufnahme (26), die an der Endfläche (16.3) des Gewindeschaftes (16.1) mündet, ein Durchgangsloch (36), das den ersten Teil (30) durchquert, und einen zweiten Teil (38) umfasst, der einen ersten Teilabschnitt (38.1), der in der Aufnahme (26) des Gewindeschaftes (16.1) aufgenommen ist, sowie einen zweiten Teilabschnitt (38.2), der in dem Durchgangsloch (36) des ersten Teils (30) aufgenommen ist und einen Querschnitt aufweist, der dafür ausgelegt ist, den ersten Teil (30) bezüglich des Gewindeschaftes (16.1) gegen Verdrehung zu sichern, umfasst,
**gekennzeichnet durch** eine Sicherungsschraube (46), die einen Kopf (46.2), der am ersten Teil (30) anliegt, sowie einen Gewindeschaft (46.1), der sich durch das Durchgangsloch (36) hindurch erstreckt und in den zweiten Teil (38) eingeschraubt wird, um den ersten und den zweiten Teil (30, 38) gegen Translation relativ zueinander zu sichern, aufweist, wobei der erste Teilabschnitt (38.1) des zweiten Teils (38) ausdehnbar ist und dafür ausgelegt ist, einen eingezogenen Zustand, in welchem der erste Teilabschnitt (38.1) in der Aufnahme (26) gleiten kann, und einen ausgedehnten Zustand, in welchem der zweite Teil (38) in der Aufnahme (26) des Gewindeschaftes (16.1) blockiert ist, anzunehmen.

2. Bolzen nach Anspruch 1, **dadurch gekennzeichnet, dass** der erste Teilabschnitt (38.1) des zweiten Teils (38) und die Aufnahme (26) des Gewindeschaftes (16.1) identische Querschnitte aufweisen, die wenigstens eine Abflachung (42) umfassen, und dadurch, dass der zweite Teilabschnitt (38.2) des zweiten Teils (38) und das Durchgangsloch (36) des ersten Teils (30) identische Querschnitte aufweisen, die wenigstens eine Abflachung (42) umfassen.

3. Bolzen nach dem vorhergehenden Anspruch, **dadurch gekennzeichnet, dass** der erste und der zweite Teilabschnitt (38.1, 38.2) denselben Querschnitt aufweisen.

4. Bolzen nach dem vorhergehenden Anspruch, **dadurch gekennzeichnet, dass** der erste und der zweite Teilabschnitt (38.1, 38.2) denselben sechseckigen Querschnitt aufweisen.

5. Bolzen nach einem der vorhergehenden Ansprüche, **dadurch gekennzeichnet, dass** der zweite Teil (38) eine Öffnung (44) mit Innengewinde, in welche die Sicherungsschraube (46) eingeschraubt wird und die sich zwischen einem ersten und einem zweiten Ende (F38, F38') des zweiten Teils (38) erstreckt, sowie wenigstens einen Schlitz (48), der dafür ausgelegt ist, eine Ausdehnung des ersten Teilabschnitts (38.1) bei einem Einschrauben der Sicherungsschraube (46) in die Öffnung (44) mit Innengewinde am ersten Teilabschnitt (38.1) zu ermöglichen, umfasst.

6. Bolzen nach den Ansprüchen 4 und 5, **dadurch gekennzeichnet, dass** der zweite Teil (38) einen Schlitz (48) für jede der Seiten des sechseckigen Querschnitts umfasst.

7. Bolzen nach einem der vorhergehenden Ansprüche, **dadurch gekennzeichnet, dass** der erste Teil (30) eine erste und eine zweite Querfläche (F30, F30'), eine laterale Außenfläche (32), welche die erste und die zweite Querfläche (F30, F30') verbindet, sowie eine Aufnahme (34), die an der der Mutter (18) zugewandten ersten Querfläche (F30) mündet und einen Boden (34.1) sowie eine laterale Innenfläche (34.2) aufweist, umfasst, wobei das Durchgangsloch (36) den Boden (34.1) und die zweite Querfläche (F30') verbindet.

8. Bolzen nach dem vorhergehenden Anspruch, **dadurch gekennzeichnet, dass** die laterale Innenfläche (34.2) der Aufnahme (34) mit einem Innengewinde versehen und dafür ausgelegt ist, auf den Gewindeschaft (16.1) aufgeschraubt zu werden.

9. Bolzen nach Anspruch 7, **dadurch gekennzeichnet, dass** die laterale Innenfläche (34.2) der Aufnahme (34) dafür ausgelegt ist, die Mutter (18) aufzunehmen, und einen Querschnitt aufweist, der mit demjenigen einer Umfangsfläche (20) der Mutter (18) identisch ist, um sie gegen Verdrehung zu sichern.

10. Anordnung, umfassend wenigstens einen Bolzen nach einem der vorhergehenden Ansprüche, welcher einen Gewindeschaft (16.1), der eine Endfläche (16.3) aufweist, eine Mutter (18), die von der Endfläche (16.3) aus auf den Gewindeschaft (16.1) aufgeschraubt wird, sowie ein Blockiersystem (24) umfasst, das verhindert, dass sich die Mutter (18) bezüglich des Gewindeschaftes (16.1) löst, und das einen ersten Teil (30) umfasst, der mit der Mutter (18) so zusammenwirkt, dass er sie gegen Translation und/oder gegen Verdrehung sichert, **dadurch gekennzeichnet, dass** das Blockiersystem (24) umfasst: eine im Gewindeschaft (16.1) positionierte Aufnahme (26), die an der Endfläche (16.3) des Gewindeschaftes (16.1) mündet, ein Durchgangsloch (36), das den ersten Teil (30) durchquert, einen zweiten Teil (38), der einen ersten Teilabschnitt (38.1), der in der Aufnahme (26) des Gewindeschaftes (16.1) aufgenommen ist, sowie einen zweiten Teilabschnitt (38.2), der in dem Durchgangsloch (36) des ersten Teils (30) aufgenommen ist und einen Querschnitt aufweist, der dafür ausgelegt ist, den ersten Teil (30) bezüglich des Gewindeschaftes (16.1) gegen Verdrehung zu sichern, umfasst, eine Sicherungsschraube (46), die einen Kopf (46.2), der am ersten Teil (30) anliegt, sowie einen Gewindeschaft (46.1), der sich durch das Durchgangsloch (36) hindurch erstreckt und in den zweiten Teil (38) eingeschraubt wird, um den ersten und den zweiten Teil (30, 38) gegen Translation relativ zueinander zu sichern, aufweist, wobei der erste Teilabschnitt (38.1) des zweiten Teils (38) ausdehnbar ist und dafür ausgelegt ist, einen eingezogenen Zustand, in welchem der erste Teilabschnitt (38.1) in der Aufnahme (26) gleiten kann, und einen ausgedehnten Zustand, in welchem der zweite Teil (38) in der Aufnahme (26) des Gewindeschaftes (16.1) blockiert ist, anzunehmen.

## Claims

1. Bolt having a threaded shank (16.1) having a terminal face (16.3), a nut (18) screwed onto the threaded shank (16.1) from the terminal face (16.3) and a blocking system (24) preventing the nut (18) from being unscrewed with respect to the threaded shank (16.1) and having a first part (30) that cooperates with the nut (18) so as to immobilize it in translation and/or in rotation, the blocking system (24) comprising
a housing (26), positioned in the threaded shank (16.1), opening at the terminal face (16.3) of the threaded shank (16.1), a passage hole (36) passing through the first part (30), a second part (38) having a first portion (38.1) that is housed in the housing (26) of the threaded shank (16.1) and a second portion (38.2) that is housed in the passage hole (36) of the first part (30) and having a transverse section configured to immobilize the first part (30) in rotation with respect to the threaded shank (16.1), **characterized by**
a blocking screw (46) having a head (46.2) bearing against the first part (30) and a threaded shank (46.1) passing through the passage hole (36) and screwed into the second part (38) so as to immobilize the first and second parts (30, 38) in translation with respect to one another, the first portion (38.1) of the second part (38) being able to expand and configured to occupy a retracted state in which the first portion (38.1) can slide in the housing (26) and an expanded state in which the second part (38) is immobilized in the housing (26) of the threaded shank (16.1).

2. Bolt according to Claim 1, **characterized in that** the first portion (38.1) of the second part (38) and the housing (26) of the threaded shank (16.1) have identical transverse sections comprising at least one flat (42) and **in that** the second portion (38.2) of the second part (38) and the passage hole (36) of the first part (30) have identical transverse sections comprising at least one flat (42).

3. Bolt according to the preceding claim, **characterized in that** the first and second portions (38.1, 38.2) have the same transverse section.

4. Bolt according to the preceding claim, **characterized in that** the first and second portions (38.1, 38.2) have the same hexagonal transverse section.

5. Bolt according to one of the preceding claims, **characterized in that** the second part (38) comprises a tapped orifice (44) into which the blocking screw (46) is screwed, extending between first and second ends (F38, F38') of the second part (38), and at least one slot (48) configured to allow expansion of the first portion (38.1) during screwing of the blocking screw (46) into the tapped orifice (44) at the first portion (38.1).

6. Bolt according to Claims 4 and 5, **characterized in that** the second part (38) comprises a slot (48) for each of the faces of the hexagonal transverse section.

7. Bolt according to one of the preceding claims, **characterized in that** the first part (30) comprises first and second transverse faces (F30, F30'), an outer lateral face (32) connecting the first and second transverse faces (F30, F30) and a housing (34) opening at the first transverse face (F30) oriented towards the nut (18) and having a bottom (34.1) and an inner lateral face (34.2), the passage hole (36) connecting the bottom (34.1) and the second transverse face (F30').

8. Bolt according to the preceding claim, **characterized in that** the inner lateral face (34.2) of the housing (34) is tapped and configured to be screwed onto the threaded shank (16.1).

9. Bolt according to Claim 7, **characterized in that** the inner lateral face (34.2) of the housing (34) is configured to house the nut (18) and has a transverse section identical to that of a peripheral face (20) of the nut (18) so as to immobilize it in rotation.

10. Assembly comprising at least one bolt according to one of the preceding claims having a threaded shank (16.1) having a terminal face (16.3), a nut (18) screwed onto the threaded shank (16.1) from the terminal face (16.3) and a blocking system (24) preventing the nut (18) from being unscrewed with respect to the threaded shank (16.1) and having a first part (30) that cooperates with the nut (18) so as to immobilize it in translation and/or in rotation, **characterized in that** the blocking system (24) comprises a housing (26), positioned in the threaded shank (16.1), opening at the terminal face (16.3) of the threaded shank (16.1), a passage hole (36) passing through the first part (30), a second part (38) having a first portion (38.1) that is housed in the housing (26) of the threaded shank (16.1) and a second portion (38.2) that is housed in the passage hole (36) of the first part (30) and having a transverse section configured to immobilize the first part (30) in rotation with respect to the threaded shank (16.1), a blocking screw (46) having a head (46.2) bearing against the first part (30) and a threaded shank (46.1) passing through the passage hole (36) and screwed into the second part (38) so as to immobilize the first and second parts (30, 38) in translation with respect to one another, the first portion (38.1) of the second part (38) being able to expand and configured to occupy a retracted state in which the first portion (38.1) can slide in the housing (26) and an expanded state in which the second part (38) is immobilized in the housing (26) of the threaded shank (16.1).
